# EUROPEAN PATENT APPLICATION

(11) **EP 0 849 134 A1**
(43) Date of publication of application: **24.06.1998**
(21) Application number: 97120497.9
(22) Date of filing: 21.11.1997
(51) Int. Cl.: B60T 13/14, B60T 8/00

(54) **Engine-driven hydraulic servo system for braking and steering**

(30) Priority: 19.12.1996 KR 9667803
(71) Applicant: Hyundai Motor Company, Seoul (KR)
(72) Inventor: Shin, Young-Keui, Uljoo-gu, Ulsan-city, Kyungsangnam-do (KR)
(74) Representative: TER MEER STEINMEISTER & PARTNER GbR

(57) **Abstract**

An engine-operated brake system comprising a hydraulic pump (14) driven by an engine (11), a reservoir (12) providing a hydraulic pump with operational oil, a valve assembly (20) for controlling streams of operational oil provided from the pump (14) to wheel cylinders (6,6 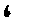 ,7) and (7'), and a control unit (30) for controlling the valve assembly (20).

## Description

### BACKGROUND OF THE INVENTION

### FIELD OF THE INVENTION

This invention relates to an engine-operated brake system using driving force of an engine and hydraulic apparatus of a power steering system.

### DESCRIPTION OF THE PRIOR ART

A brake system is installed in a vehicle for reducing a vehicle speed and parking the vehicle. Brake operation is generally accomplished by friction members for changing kinetic energy to heat energy which is then emitted to the environment.

Further, various types of brake systems have been suggested, but they are generally divided into two types, that is, a main brake and a parking brake in accordance with operational conditions, whereby the main brake is for braking a vehicle during driving and the parking brake is for parking a vehicle to prevent the vehicle from moving accidentally. The main brake is also called as foot brake since it is operated by foot, and the parking brake is called as hand brake since it is operated by hand.

Brake systems are also divided into two types in accordance with force transfer method, ie, a mechanical type using rods and wires, and a hydraulic type using a hydraulic apparatus. Generally, the foot brake is a hydraulic type and the hand brake is classified into a mechanical type.

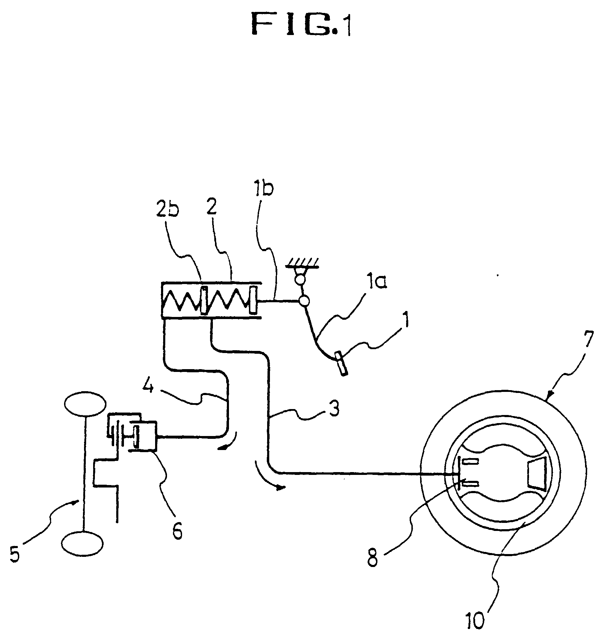

Fig. 1 is a schematic diagram for illustrating a conventional hydraulic brake system.

As shown, when a driver kicks a pedal 1, brake oil is compressed in a master cylinder 2 by advance of a piston 2a in accordance with movement of a push-rod 1b connected to a pedal arm 1a so that the compressed brake oil is provided to wheel cylinders 6 and 8 of caliper (forward wheel) and of brake shoe (rear wheel). As a result, brake pads of caliper are pressed against rotating disc(forward wheel) where brake linings are pressed against brake drum 10, so that friction therebetween causes reduction of vehicle speed. However, when the pedal is released, the compressed brake oil returns back to the master cylinder 2 so that retarding effects disappears.

Further, a pedal force enforcing device called as booster can be installed between the master cylinder 2 and the pedal 1 for easy operation of the pedal.

Recently, a power steering system is increasingly used, where a power cylinder is connected to a gear mechanism of the steering system in order to reduce a steering efforts. A pump is used for providing the power cylinder with hydraulic pressure. This pump is generally driven by an engine and the pump is connected to a reservoir for brake oil supply.

Therefore, the hydraulic apparatus of the power steering system utilized in brake system as brake operational device can contribute to simplification of vehicle structure as well as decreasing a manufacturing cost of a vehicle.

However, it should be noted that the new typed brake system be preferably manipulated by a pedal to provide a driver accustomed to brake pedal with manipulation comforts.

Accordingly, it is an object of the present invention to disclose a engine-operated brake system using an engine-driven hydraulic pump for providing a braking force.

### SUMMARY OF THE INVENTION

The above and other objects are achieved by the invention of an engine-operated brake system comprising a hydraulic pump driven by the engine, a reservoir providing a hydraulic pump with operational oil, a valve assembly for controlling streams of operational oil provided from the pump to wheel cylinders, and a control unit for controlling the valve assembly.

Further, the invention provides a brake system in which the pump is connected with a reservoir of the pump of the power steering system.

In addition, the invention provides a brake system in which the hydraulic pump is driven by an engine and the fluid pressure from the pump is controlled through a valve assembly by the control unit.

Further, the invention provides a brake system in which the control unit controls an opening time interval of the valve assembly according to signals of a rotated pedal angle sensor and a vehicle speed sensor.

In addition, the invention provides a brake system in which the control unit controls the valve assembly to provide a proper pressure according to vehicle speed sensed by a vehicle speed sensor.

Further, the invention provides a brake system in which the control unit controls the valve assembly according to signals from a pressure sensor for detecting a line pressure in brake lines so that pressure in brake lines becomes a predetermined pressure corresponding to a rotated angle of a pedal.

Accordingly, the brake system according to the present invention utilizes an engine power and a hydraulic apparatus for power steering system by installing a hydraulic pump in parallel with the hydraulic pump for power steering system to attain necessary a hydraulic pressure for operating a brake system, so that the invention simplifies the vehicle brake system to thereby contribute to improvement of vehicle design as well as decrease of manufacturing cost.

### BRIEF DESCRIPTION OF THE DRAWINGS

For fuller understanding of the nature and objects of the invention, reference should be made to the following detailed description taken in conjunction with the accompanying drawings in which.
Fig. 1 is a schematic diagram for illustrating a conventional hydraulic brake system;
Fig. 2 shows an engine-operated brake system according to the present invention.

### DESCRIPTION OF THE PREFERRED EMBODIMENTS

The preferred embodiments of the present invention will now be described in detail with reference to the accompanying drawings.

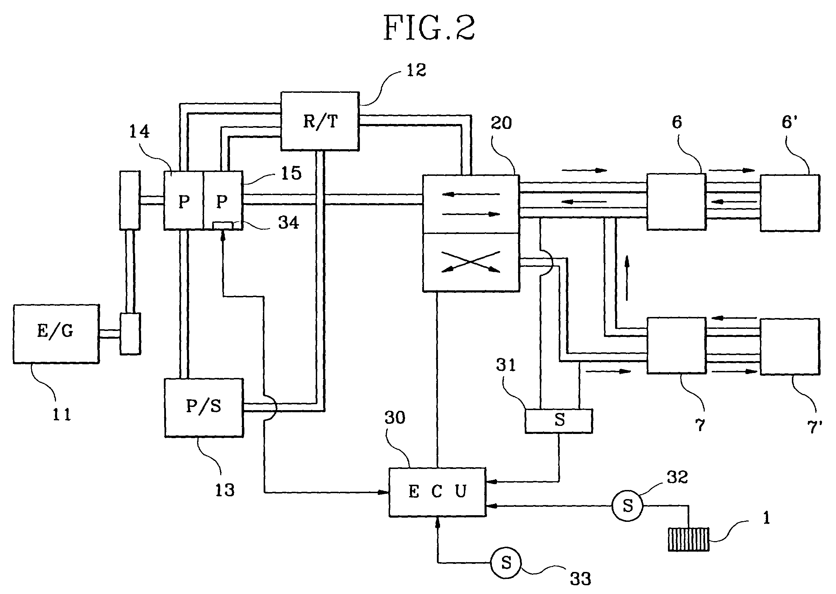

As shown in Fig. 2, the engine-operated brake system according to the present invention adopts a structure in which a hydraulic pump (P) 15 for operating a brake is installed in parallel with a hydraulic pump (P) 14 for supplying a hydraulic pressure to a power steering apparatus (P/S) 13, and an engine (E/G) 11 drives the pump 15 to provide wheel cylinders 6,6',7,7' with hydraulic pressure.

Meanwhile, a valve assembly 20 is used for controlling open/close and for direction of hydraulic pressure provided from the pump 15. The valve assembly 20 is opened and closed by a command from a control unit (ECU) 30.

The control unit 30 receives signals from a rotated angle sensor (S) 32 for detecting a rotated angle of a pedal 1, a hydraulic pressure sensor (S) 31 for detecting hydraulic pressure in the hydraulic line of the brake system and a vehicle speed sensor (S) 33 installed in transmission and so on for detecting vehicle speed to provide the wheel cylinders 6,6',7 and 7' with hydraulic pressure proportional to the rotated angle of the pedal 1.

However, the system can be constituted by selectively using either of such sensors 31, 32 and 33. For example, the system can include a rotated angle sensor 32 so that if the pedal 1 is kicked down, the valve assembly 20 is time-controlled to be opened during a time interval pre-established according to the rotated angle of the pedal 1. As the system further includes a vehicle speed sensor 33 in addition to the above-mentioned sensors for controlling the valve assembly 20 according to driving condition of a vehicle, the sensors 31 and 32 shown in Fig. 2 are for illustrating purposes only and do not restrict the invention thereto.

The valve assembly 20 according to the present invention functions to open and close brake lines toward the wheel cylinders 6,6',7 and 7' for providing and releasing a hydraulic pressure. As shown in Fig. 2, the valve assembly 20 can be constituted such that it provides both the front wheel side and the rear wheel side separately with brake oil when the system is operated while the oil returns through a single return route to a reservoir 12.

Further, if incessant driving of the pump 15 causes operational difficulties in operating the pump 14 for the power steering system or results in great power losses of the engine, the brake system can be constructed such as the control unit 3 should increase engine R.P.M. and the control unit 30 should limit the fluid pressure provided to the brake system through a by-pass hole in the pump 15 according to signal from a pressure sensor 34 installed in the pump 15.

Accordingly, in the brake system as illustrated in Fig. 2, if the pedal 1 is kicked down, the control unit 30 detects a rotated angle of the pedal 1 and a vehicle speed together with the hydraulic pressure of the hydraulic line of the brake system to compare a current pressure with a memorized predetermined pressure and to open the valve assembly 20 till the line pressure reaches the predetermined pressure so that the high pressure oil is provided to the wheel cylinders 6,6',7 and 7' for operating the brake. Then, if the line pressure reaches a predetermined pressure, the control unit 30 closes the valve assembly 20 in order to prevent the excessive pressure from being provided to the wheel cylinders 6,6',7 and 7'.

Therefore, the control unit 30 is provided with information about the proper line pressure corresponding to rotated angles of the pedal 1 and the vehicle speed therein and controls the line pressure for optimizing the brake operational conditions. So, if the line pressure is not good enough to brake wheels safely due to the line pressure not reaching an optimistic pressure owing to reasons such as wear of brake pads or brake shoes, the valve assembly is continuously opened to add an increased pressure till the pressure reaches the predetermined pressure, so that brake system can always accomplish an optimistic operation.

Meanwhile, if the pedal 1 is released, the control unit 30 opens the return route, which causes the compressed brake oil to return to the reservoir 12 to thereby release the brake system.

As described above, the brake system according to the present invention does not need its hydraulic devices such as a booster and a master cylinder for operating a wheel brake since the invention obtains necessary hydraulic pressure by installing only a hydraulic pump 15 in parallel with the pump 14 for power steering system and utilizing hydraulic devices of the power steering system. It can also simplify brake system of a vehicle, so that the manufacturing cost can be reduced as well as the design freedom of vehicle can be enlarged.

Further, shortness of line pressure owing to wear of brake pads or brake shoes can be compensated in the present invention by automatically controlling line pressure since the valve assembly is controllably opened by the control unit 30 till the pressure reaches the predetermined pressure, so that brake system can accomplish an optimistic operation.

Further, the invention can be utilized in various systems such as a brake system incorporated with Anti-blocking Brake System by varying the control method of the valve assembly 20 according to the control unit 30.

Numerous modifications and variations of the present invention are possible in light of the above teachings. It is therefore to be understood that the invention is defined by the scope of the appended claims, and the invention may be practiced in ways other than those in the intent and teachings of the invention.

## Claims

1. An engine-operated brake system, the system comprising :
a hydraulic pump driven by an engine;
a reservoir providing a hydraulic pump with operational oil;
a valve assembly for controlling streams of operational oil provided from the pump to wheel cylinders;
and a control unit for controlling the valve assembly.

2. The system as claimed in claim 1, in which said hydraulic pump is connected with a reservoir for a pump of the power steering system.

3. The system as claimed in claim 1, in which fluid pressure from said pump is controlled through a valve assembly by the control unit.

4. The system as claimed in claim 1 or claim 2, in which said control unit controls an opening time of the valve assembly according to signals of a rotated pedal angle sensor and a vehicle sensor.

5. The system as claimed in claim 4, in which said control unit controls the valve assembly according to signal from a pressure sensor for detecting a line pressure in brake lines so that pressure in the brake lines becomes a predetermined pressure corresponding to the rotated angle and the vehicle speed.
